# EUROPEAN PATENT APPLICATION

(11) **EP 4 582 713 A1**
(43) Date of publication of application: **09.07.2025**
(21) Application number: 23860363.3
(22) Date of filing: 29.08.2023
(51) Int. Cl.: F16C 33/32, C21D 9/36, F16C 19/22

(54) **ROLLING BEARING AND ROLLING BODY PRODUCTION METHOD**

(30) Priority: 31.08.2022 JP 2022138275
(71) Applicant: NSK LTD., Tokyo 141-8560 (JP)
(72) Inventor: TSUGUMI Kyoka, Fujisawa-shi, Kanagawa 251-8501 (JP); UCHIDA Hiroyuki, Fujisawa-shi, Kanagawa 251-8501 (JP); ZHANG Mian, Fujisawa-shi, Kanagawa 251-8501 (JP); KOMATA Hiroki, Fujisawa-shi, Kanagawa 251-8501 (JP); MIYAMOTO Yuuji, Fujisawa-shi, Kanagawa 251-8501 (JP); HAMASAKI Junichi, Fujisawa-shi, Kanagawa 251-8501 (JP); HASHIMOTO Sho, Fujisawa-shi, Kanagawa 251-8501 (JP)
(74) Representative: Rings, Rolf
(86) International application number: PCT/JP2023/031296
(87) International publication number: WO 2024/048601

(57) **Abstract**

There are provided a rolling bearing and a rolling element production method, which can improve a flacking life. A rolling bearing includes an inner ring (2), an outer ring (3), and a rolling element (4). The rolling element (4) has a hardness of HRC61.1 or higher and a residual austenite content of 31 vol% or less, and a ratio of a hardness of the rolling element (4) to a hardness of the inner ring (2) and the outer ring (3) is 1 or higher.

## Description

### Technical Field

The present invention relates to a rolling bearing and a rolling element production method.

### Background Art

Recently, in a bearing industry as a whole, there is a strong trend to pursue a longer life. Owing to advancements in steelmaking technology, cleanliness of bearing steel has been significantly improved.
Therefore, a life problem caused by interior-originating flacking is reduced, and there is a shortened life problem caused by surface-originating flacking occurring from an indentation formed by foreign matter contamination in a lubricant.

In order to improve this flacking life, for example, PTL 1 discloses the following rolling bearing. At least one member of an outer ring, an inner ring, or a rolling element is obtained by performing a quenching treatment and a tempering treatment. A hardness of a surface layer portion thereof is HRC60 or higher and HRC65 or lower. Furthermore, a residual austenite of a raceway surface is 15% by volume or more and 24% by volume or less.

### Citation List

### Patent Literature

PTL 1: JP 2009-41652 A

### Summary of Invention

### Technical Problem

According to the method disclosed in PTL 1, a residual austenite content can be increased by performing the quenching treatment and the tempering treatment without performing a special heat treatment such as a carburizing and carbo-nitriding treatment, and thus, the flacking life can be improved. However, it is necessary to further improve the flacking life.

Therefore, the present invention has been made in view of the above-described problems, and an object of the present invention is to provide a rolling bearing and a rolling element production method, which can improve the flacking life.

### Solution to Problem

According to an aspect of the present invention, there is provided a rolling bearing including: an inner ring; an outer ring; and a rolling element. The rolling element has a hardness of HRC61.1 or higher and a residual austenite content of 31 vol% or less, and a ratio of a hardness of the rolling element to a hardness of the inner ring and the outer ring is 1 or higher.

According to an aspect of the present invention, there is provided a rolling element production method which is used for a rolling bearing, the production method includes: a quenching step in which a material is processed into a predetermined shape to form the rolling element, the heated material is subsequently immersed in oil or water at 60°C or higher and 120°C or lower, the material is held in a state of being immersed in the oil or the water, and a temperature of the material is held at 60°C or higher and 120°C or lower for 20 minutes or longer; a first low temperature holding step in which the material is cooled after the quenching step and the material is held at a temperature of 5°C or higher and 35°C or lower for 30 minutes or longer; a vacuum cleaning step in which vacuum cleaning is performed on the material at a temperature of 100°C or higher and 140°C or lower for 40 minutes or longer after the first low temperature holding step; and a second low temperature holding step in which the material is cooled after the vacuum cleaning step and the temperature of the material is held at 35°C or lower.

### Advantageous Effects of Invention

According to an aspect of the present invention, it is possible to provide a rolling bearing and a rolling element production method, which can improve a flacking life.

### Brief Description of Drawings

FIG. 1 is a cross-sectional view illustrating a rolling bearing according to an embodiment of the present invention;
FIG. 2 is a graph illustrating a relationship between a residual austenite content and a dimensional change rate; and
FIG. 3 is a view for describing a heat treatment method of a rolling element.

### Description of Embodiments

In the following detailed description, an embodiment of the present invention will be described with reference to the drawings. In the description of the drawings, the same or similar reference numerals will be assigned to the same or similar elements, and repeated descriptions will be omitted. Each drawing is schematic, and may differ from the actual one in some cases. In addition, the embodiment will be described below as examples of a device and a method for embodying the technical idea of the present invention, and the technical idea of the present invention does not specify a material, a structure, a disposition, or the like of configuration components as the followings. The technical idea of the present invention may be modified in various ways within the technical scope specified by the appended claims.

### <Rolling Bearing>

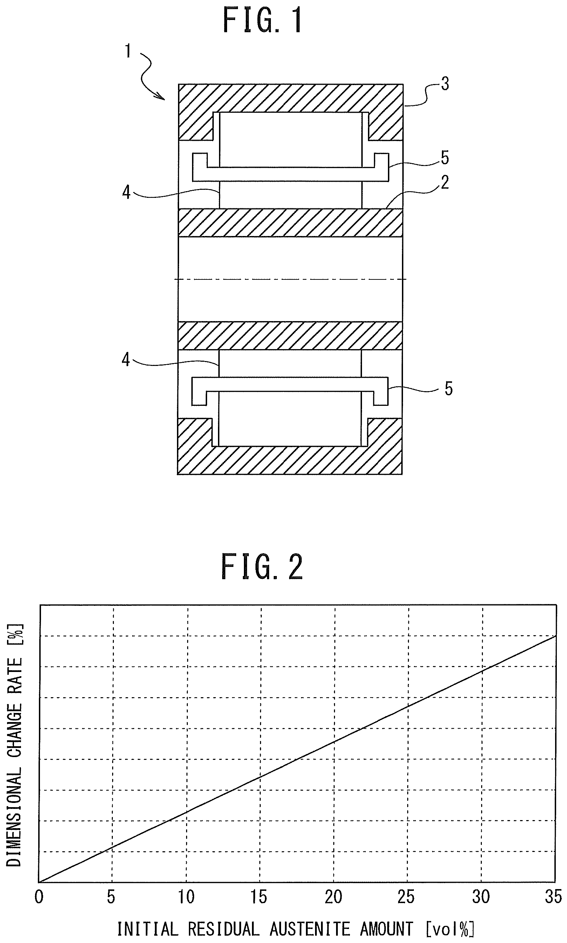

A rolling bearing 1 according to an embodiment of the present invention will be described with reference to FIG. 1. As illustrated in FIG. 1, the rolling bearing 1 includes an inner ring 2, an outer ring 3, a plurality of rolling elements 4, and a holder 5. The inner ring 2 and the outer ring 3 will be collectively referred to as a raceway ring.

A ratio of a hardness of the rolling element 4 to a hardness of the inner ring 2 and the outer ring 3 is 1 or higher. That is, the hardness of the rolling element 4 is equal to or higher than the hardness of the inner ring 2 and the outer ring 3.

It has been found that early flacking under the above-described foreign matter contamination in the lubricant is caused by a tangential force acting on a rolling surface between the raceway ring and the rolling element 4. Factors that affect the tangential force include a surface shape, a surface roughness, and the like of the rolling surface. When a rolling device such as the rolling bearing is used in an environment in which an oil film is insufficiently formed on a rolling portion, protrusion interference in the surface roughness occurs between two rolling surfaces. In a protrusion interference portion where the protrusion interference occurs, a friction coefficient increases, and local contact stress increases. Therefore, it is known that a life of the rolling device is shortened due to occurrence of surface damage. When the tangential force acting on the raceway ring increases due to Mindrin slip or the like, the inner ring 2 and the outer ring 3 are likely to be damaged due to rotation. Therefore, the surface hardness of the rolling element 4 is set to be harder than the raceway surface, and a proper hardness difference is assigned to a contact member. In this manner, the surface roughness is improved, and damage to the rolling element 4 can be suppressed as much as possible.

In the present embodiment, the rolling element 4 is a roller. In addition, the rolling element 4 has a hardness of HRC61.1 or higher and a residual austenite content of 31 vol% or less. Furthermore, in the rolling element 4, it is preferable that a surface residual compressive stress is 100 MPa or lower. Since there is a relationship illustrated in FIG. 2 between the residual austenite content and a dimensional change rate, as an initial residual austenite content is larger, a dimensional change tends to increase. When the residual austenite content increases, a gap between the rolling element 4 and the raceway ring is narrowed, and seizure or the like occurs. Consequently, a life is easily shortened. Therefore, since an upper limit of the residual austenite content is set to 31 vol%, dimensional stability can be improved, and a surface pressure increase caused by a time-dependent change in dimensions or occurrence of the seizure or the like can be suppressed. Therefore, a life of the rolling bearing can be improved. In addition, since the hardness of the rolling element 4 is set to HRC61.1 or higher, the rolling element 4 can be harder than the inner ring 2 and the outer ring 3.

The inner ring 2 and the outer ring 3 are not particularly limited as long as a hardness ratio to the rolling element 4 is satisfied, and the production method, the material, or the like are not particularly limited. It is preferable that the inner ring 2, the outer ring 3, and the rolling element 4 are formed of the same material of SUJ2 or SUJ3, which is high carbon chromium bearing steel specified in JIS G 4805.

### <Rolling element Production Method>

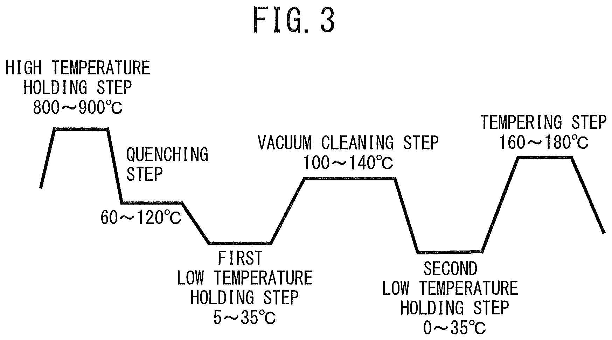

Next, a production method of the rolling element 4 according to the present embodiment will be described. In the present embodiment, the rolling element 4 is produced by using a heat treatment pattern illustrated in FIG. **3****.** As illustrated in FIG. 3, first, a high temperature holding step is performed in which a material (also referred to as a process target material or a workpiece) processed into a predetermined shape is heated to form the rolling element 4 and the material is held at a temperature of 800°C or higher and 900°C or lower for a prescribed time. In the high temperature holding step, it is preferable that a time for holding the material at the temperature of 800°C or higher and 900°C or lower is 30 minutes or longer and 90 minutes or shorter.

After the high temperature holding step, a quenching step is performed in which a quenching treatment is performed on the heated material. In the quenching step, the material is immersed in oil or water at 60°C or higher and 120°C or lower (quenching treatment). In a state where the material is immersed in the oil or the water, a temperature of the material is held at 60°C or higher and 120°C or lower, preferably at 90°C. In addition, the time for holding the temperature of the material at 60°C or higher and 120°C or lower in a state in which the material is immersed in the oil or the water is 20 minutes or longer, preferably 24 minutes or longer. When the temperature of the material is lower than 60°C, residual austenite is not stable. In addition, when the temperature of the material exceeds 120°C, energy is wasted, and production costs increase.

After the quenching step, a first low temperature holding step is performed in which the material is cooled and the temperature of the material is held at 5°C or higher and 35°C or lower for 30 minutes or longer. In the first low temperature holding step, the material subjected to the quenching treatment is cooled in such a manner that the material is left unattended and stationary at room temperature. In this case, air cooling may be performed by using a fan or the like. In addition, in the first low temperature holding step, since the material is held at a temperature of 5°C or higher and 35°C or lower, the residual austenite can be further stabilized.

After the first low temperature holding step, a vacuum cleaning step is performed in which vacuum cleaning is performed on the material at a temperature of 100°C or higher and 140°C or lower, preferably 120°C for 40 minutes or longer. In the vacuum cleaning step, it is preferable to use a vacuum cleaner which is able to heat and can set a temperature. In addition, it is preferable that a time for performing the vacuum cleaning is 40 minutes or longer. The vacuum cleaning has excellent cleaning power, and moreover, can remove air bubbles. A cleaning liquid and the material come into contact with every corner of the material. In this manner, the material is uniformly and quickly heated. Furthermore, in the vacuum cleaning, a loss of a solvent is small, and an environmental impact is reduced.

After the vacuum cleaning step, a second low temperature holding step is performed in which the material is cooled and the temperature of the material is held at 35°C or lower. In the second low temperature holding step, the material may be cooled in the same manner as in the first low temperature holding step, and oil cooling or water cooling may be used when the material is cooled to a low temperature of approximately 0°C to 10°C. The temperature of the material may be set to 0°C or lower, but this configuration is not preferable since energy is wasted. Since the second low temperature holding step is performed, the residual austenite can be further stabilized. When the temperature of the material exceeds 35°C in the second low temperature holding step, an advantageous effect of stabilizing the residual austenite is reduced. In addition, in the second low temperature holding step, it is preferable that the temperature of the material is held at 35°C or lower for 15 minutes or longer.

After the second low temperature holding step, a tempering step is performed in which the material is held at a temperature of 160°C or higher and 180°C or lower for 90 minutes or longer and 150 minutes or shorter. The tempering step is not essential, but when a tempering treatment is performed, toughness can be improved, and dimensional stability can be improved.

In the production method of the rolling rolling element 4 according to the present embodiment, at least a quenching step, a first low temperature holding step, a vacuum cleaning step, and a second low temperature holding step are performed. In this manner, the rolling element 4 in which a residual austenite content is 31 vol% or less, a hardness is HRC61.1 or higher, and a surface residual compressive stress is 100 MPa or lower can be produced without any difficulty while energy is reduced. The residual compressive stress is an average value in a circumferential direction at a depth of 100 µm.

In addition, in the production method of the rolling element 4 according to the present embodiment, a special facility is not required, and heat treatment conditions can be optimized by using a general facility. Therefore, it is not necessary to provide a new facility, and a life of the rolling bearing can be lengthened at a lower cost. Furthermore, since a nitriding treatment or the like used for a surface treatment of the bearing is not required, the production method leads to reduction of CO₂.

Furthermore, in the rolling bearing in the present embodiment, there is no restriction on a magnitude of the hardness of the inner ring 2 and the outer ring 3. Therefore, a material to be used is less restricted, and production can be easily performed.

### <Modification Example>

Hitherto, although the present invention has been described with reference to the specific embodiment, the present invention is not intended to be limited by these descriptions. Referring to the description of the present invention, the disclosed embodiment and other embodiments of the present invention including various modification examples are apparent to those skilled in the art. Therefore, it should be understood that the embodiments of the invention described in the appended claims also include embodiments including these modification examples alone or in combination, which are described in the present specification.

For example, in the above-described embodiment, the inner ring **2,** the outer ring **3,** and the rolling element 4 are formed of the same material of SUJ2 or SUJ3, which is high carbon chromium bearing steel specified in JIS G 4805, but the present invention is not limited to this example. The inner ring **2,** the outer ring **3,** and the rolling element 4 may be formed of materials other than SUJ2 and SUJ3, or may be respectively formed of different materials.

### <Advantageous Effects of Embodiment>

(1) According to an aspect of the present invention, there is provided the rolling bearing 1. The rolling bearing 1 includes the inner ring **2,** the outer ring **3,** and the rolling element 4. The rolling element 4 has the hardness of HRC61.1 or higher and the residual austenite content of 31 vol% or less, and the ratio of the hardness of the rolling element 4 to the hardness of the inner ring 2 and the outer ring 3 is 1 or higher.
   According to the configuration of (1) above, the surface hardness of the rolling element 4 is harder than the surface hardness of the inner ring 2 and the outer ring 3, and the surface roughness is improved by a proper hardness difference from the contact member. Therefore, damage to the rolling element 4 can be suppressed. In addition, with regard to the rolling element 4, dimensional stability is improved while the hardness is improved, and a surface pressure increase caused by a time-dependent change in dimensions or occurrence of the seizure or the like can be suppressed. In this manner, a flacking life of the rolling bearing 1 can be improved.
(2) In the configuration of (1) above, the rolling element 4 is a roller.
(3) In the configuration of (1) or (2) above, the rolling element 4 is formed of the material of SUJ2 or SUJ3, which is high carbon chromium bearing steel specified in JIS G 4805.
(4) According to an aspect of the present invention, there is provided the production method of the rolling element **4,** which is used for the rolling bearing. The production method of the rolling element 4 includes: the quenching step in which the material is processed into a predetermined shape to form the rolling element 4, the heated material is subsequently immersed in the oil or the water at 60°C or higher and 120°C or lower, the material is held in a state of being immersed in the oil or the water, and the temperature of the material is held at 60°C or higher and 120°C or lower for 20 minutes or longer; the first low temperature holding step in which the material is cooled after the quenching step and the material is held at a temperature of 5°C or higher and 35°C or lower for 30 minutes or longer; the vacuum cleaning step in which the vacuum cleaning is performed on the material at a temperature of 100°C or higher and 140°C or lower for 40 minutes or longer after the first low temperature holding step; and the second low temperature holding step in which the material is cooled after the vacuum cleaning step and the temperature of the material is held at 35°C or lower.
   According to the configuration of (4) above, the rolling element 4 having the configuration of (1) above can be stably produced. In addition, heat treatment conditions can be optimized by using a general facility, and the life of the rolling bearing can be lengthened at a low cost.
(5) In the configuration of (4) above, the production method further includes: the tempering step in which the material is held at a temperature of 160°C or higher and 180°C or lower for 90 minutes or longer and 150 minutes or shorter after the second low temperature holding step.
(6) In the configuration of (4) or (5) above, the rolling element 4 is a roller.
(7) In the configuration of any one of (4) to (6) above, the rolling element 4 is formed of the material of SUJ2 or SUJ3, which is high carbon chromium bearing steel specified in JIS G 4805.
(8) The rolling bearing according to the aspect of the present invention is the rolling bearing including the inner ring, the outer ring, and the rolling element, and is produced by the rolling bearing production method according to the configuration of any one of (4) to (7) above.

### Examples

Examples adopted by the inventors will be described. In the present example, the rolling element 4 is produced by using the rolling element production method according to the above-described embodiment, and the residual stress, the residual austenite content, and the hardness are investigated. Table 1 shows results of the heat treatment conditions, the residual stress, the residual austenite content, and the hardness in Examples 1 to 6 adopting the heat treatment conditions in the above-described embodiment, and in Comparative Examples 1 and 2 adopting the heat treatment conditions different from the heat treatment conditions in the above-described embodiment.

**[Table 1]**

| | Quenching Step | | Oil Drainage [min] | First Low Temperature Holding Step | | Vacuum Cleaning Step | | Second Low Temperature Holding Step | Tempering Step | Residual Stress [MPa] | Residual Austenite Content [vol%] | Hardness [HMV] |
|---|---|---|---|---|---|---|---|---|---|---|---|---|
| | Quenching Oil Temperature [°C] | Time [min] | | Cooling Method | Time [min] | Method | Time [min] | Method•Temperature | Temperature [°C] | | | |
| Ex. 1 | 90 | 24 | 40 | Radiational Cooling | 30 | Vacuum 120°C | 40 | 0°C to 10°C | 180 | 20 | 20 | 758 |
| Ex. 2 | 90 | 24 | 40 | - | - | Vacuum 120°C | | 0°C to 10°C | 180 | 54 | 18 | 772 |
| Ex. 3 | 90 | 24 | 40 | Radiational Cooling | 30 | Vacuum 120°C | | 0°C to 10°C | 180 | 43 | 19 | 778 |
| Ex. 4 | 60 | 24 | 40 | Fan Cooling | 30 | Vacuum 120°C | 40 | 0°C to 10°C | 160 | 81 | 23 | 784 |
| Ex. 5 | 60 | 24 | 40 | Fan Cooling | 30 | Vacuum 120°C | 40 | 0°C to 10°C | 180 | 58 | 20 | 759 |
| Ex. 6 | 60 | 24 | 40 | Fan Cooling | 30 | Vacuum 120°C | 40 | 0°C to 10°C | 200 | 27 | 13 | 741 |
| Comp. Ex. 1 | 90 | 24 | 40 | Radiational Cooling | 30 | Hot Water 80°C | 30 | Radiational Cooling 15 min | 180 | 13 | 26 | 731 |
| Comp. Ex. 2 | 60 | 24 | 40 | Radiational Cooling | 30 | Vacuum 120°C | 40 | Radiational Cooling 30 min | 180 | 59 | 26 | 736 |

In the present example, first, as the high temperature holding step, the material obtained by processing the material of SUJ2 into a shape of the rolling element 4 is heated to 845°C. Next, as the quenching step, the heated material is immersed in the oil at 60°C or 90°C to perform the quenching treatment. A time for immersing the material in the oil is set to 24 minutes. Furthermore, oil drainage is performed for 40 minutes, and thereafter, the first low temperature holding step is performed. In the first low temperature holding step, the material is held at a temperature of 5°C or higher and 35°C or lower for 30 minutes by using a method of radiational cooling in which the material is left unattended and cooled at room temperature or a method of fan cooling in which air cooling is performed on the material by using a fan. Next, as the vacuum cleaning step, the vacuum cleaning is performed at a temperature of 120°C for 40 minutes. In Comparative Example 1, the cleaning is performed with hot water at 80°C for 30 minutes instead of the vacuum cleaning. Furthermore, as the second low temperature holding step, the material is cooled and held at a temperature of 0°C or higher and 10°C or lower. In Comparative Examples 1 and 2, the cooling is performed by the radiational cooling for 15 minutes or 30 minutes. Thereafter, as the tempering step, the material is heated and held at a temperature of 160°C, 180°C, or 200°C.

According to the present example, it is confirmed that the rolling element 4 can be produced in which the residual austenite content is 31 vol% or less, the hardness is HRC61.1 or higher, and the surface residual compressive stress is 100 MPa or lower. HRC61.1 or higher corresponds to 740 or higher in HMV (SAE J417).

### Reference Signs List

- 1:: rolling bearing
- 2:: inner ring
- 3:: outer ring
- 4:: rolling element

## Claims

1. A rolling bearing comprising:
an inner ring;
an outer ring; and
a rolling element,
wherein the rolling element has a hardness of HRC61.1 or higher and a residual austenite content of 31 vol% or less, and a ratio of a hardness of the rolling element to a hardness of the inner ring and the outer ring is 1 or higher.

2. The rolling bearing according to claim **1,** wherein the rolling element is a roller.

3. The rolling bearing according to claim 1 or 2, wherein the rolling element, the inner ring, and the outer ring are formed of the same material of SUJ2 or SUJ3, which is high carbon chromium bearing steel specified in JIS G 4805.

4. A rolling element production method which is used for a rolling bearing, the production method comprising:
a quenching step in which a material is processed into a predetermined shape to form the rolling element, the heated material is subsequently immersed in oil or water at 60°C or higher and 120°C or lower, the material is held in a state of being immersed in the oil or the water, and a temperature of the material is held at 60°C or higher and 120°C or lower for 20 minutes or longer;
a first low temperature holding step in which the material is cooled after the quenching step and the material is held at a temperature of 5°C or higher and 35°C or lower for 30 minutes or longer;
a vacuum cleaning step in which vacuum cleaning is performed on the material at a temperature of 100°C or higher and 140°C or lower for 40 minutes or longer after the first low temperature holding step; and
a second low temperature holding step in which the material is cooled after the vacuum cleaning step and the temperature of the material is held at 35°C or lower.

5. The rolling element production method according to claim 4, further comprising a tempering step in which the material is held at a temperature of 160°C or higher and 180°C or lower for 90 minutes or longer and 150 minutes or shorter after the second low temperature holding step.

6. The rolling element production method according to claim 4 or 5, wherein the rolling element is a roller.

7. The rolling element production method according to claim 4 or 5, wherein the rolling element is formed of a material of SUJ2 or SUJ3, which is high carbon chromium bearing steel specified in JIS G 4805.
